# EUROPEAN PATENT APPLICATION

(11) **EP 3 291 108 A1**
(43) Date of publication of application: **07.03.2018**
(21) Application number: 17001469.0
(22) Date of filing: 31.08.2017
(51) Int. Cl.: G06F 17/30

(54) **SYSTEM AND METHOD FOR FACILITATING PRESENTATION AND/OR REVIEW OF CLIENT-RELATED INFORMATION**

(30) Priority: 01.09.2016 US 201615254584
(71) Applicant: UBS Business Solutions AG, 8001 Zürich (CH)
(72) Inventor: Felberbaum, Debra, New Jersey, 07640 (US); Ferone, Marilee, New Jersey 07, 07042 (US); Kokolis, Alexander N., New Jersey, 08055 (US); Bushell, Bryce, New Jersey, 07928 (US)
(74) Representative: Bosch Jehle Patentanwaltsgesellschaft mbH

(57) **Abstract**

In certain embodiments, a request for client information may be obtained via a user input provided at a user interface. A first risk profile value may be determined based on account risk profile information associated with first individual accounts. A second risk profile value may be determined based on account risk profile information associated with second individual accounts. Responsive to the client information request, the first risk profile value may be presented on a first view of the user interface, and the second risk profile value may be stored in cache while the first view is provided on the user interface and prior to a second view being provided on the user interface. Responsive to an indication to provide the second view on the user interface, the second risk profile value may be obtained from the cache and presented on the second view of the user interface.

## Description

### FIELD OF THE INVENTION

The invention relates to presentation and/or review of client-related information, including, for example, cache-based presentation and/or review of client-related information, real-time determination of client-related information, etc.

### BACKGROUND OF THE INVENTION

Technical issues as well as other challenges associated with client-related information presentation/review systems are known. For example, client-related information presentation/review systems generally rely on information available at one or more databases (e.g., databases internal or external to such systems) to present relevant information to a user, and users of typical presentation/review systems may suffer from delays resulting from the systems having to retrieve all information relevant to a user request from those databases if, for instance, none of the relevant information has been recently accessed by the user. Such delays are further increased when, for example, the requested information must be calculated from the retrieved relevant information. As another example, typical presentation/review systems may lack one or more features described herein.

### SUMMARY OF THE INVENTION

Aspects of the invention relate to methods, apparatuses, and/or systems for facilitating presentation and/or review of client-related information. In certain embodiments, risk profile values may be determined based on account risk profile information associated with individual accounts. Responsive to the determination of the profile values, at least one subset of the risk profile values may be caused to be presented on a first view of a user interface (that is provided on the user interface prior to a second view of the user interface), and at least one other subset of the risk profile values may be caused to be stored in cache memory while the first view is provided on the user interface and prior to the second view being provided on the user interface. Responsive to an indication to provide the second view on the user interface, the other subset of the risk profile values (stored in the cache memory) may be obtained from the cache memory and caused to be presented on the second view of the user interface. In this way, prior to the indication to provide the second view on the user interface, the other subset of the risk profile values may be stored in the cache memory, for example, to significantly decrease request-to-presentation delays.

In some embodiments, a computer system may be programmed to: obtain, via a user interface, a request for client information, the client information comprising risk profile information; determine a first risk profile value based on first account risk profile information associated with first individual accounts and a second risk profile value based on second account risk profile information associated with second individual accounts; responsive to the client information request, cause the first risk profile value to be presented on a first view of the user interface; responsive to the client information request, cause the second risk profile value to be stored in cache memory while the first view is provided on the user interface and prior to a second view being provided on the user interface; and responsive to an indication to provide the second view on the user interface, obtain the second risk profile value from the cache memory and cause the second risk profile value to be presented on the second view of the user interface.

Various other aspects, features, and advantages of the invention will be apparent through the detailed description of the invention and the drawings attached hereto. It is also to be understood that both the foregoing general description and the following detailed description are exemplary and not restrictive of the scope of the invention. As used in the specification and in the claims, the singular forms of "a", "an", and "the" include plural referents unless the context clearly dictates otherwise. In addition, as used in the specification and the claims, the term "or" means "and/or" unless the context clearly dictates otherwise.

### BRIEF DESCRIPTION OF THE DRAWINGS

FIG. 1 shows a system for facilitating presentation and/or review of client-related information, in accordance with one or more embodiments.
FIG. 2 shows a diagram of a layered architecture for facilitating presentation and/or review of client-related information, in accordance with one or more embodiments.
FIGS. 3A and 3B show sequence flows for loading dashboard data for a user, in accordance with one or more embodiments.
FIGS. 4A and 4B show views of an application that facilitates cache-based presentation and/or review of client-related information, in accordance with one or more embodiments.
FIGS. 5A, 5B, and 5C show views of an application for soliciting attention and response to certain items, in accordance with one or more embodiments.
FIGS. 6 and 7 show flowcharts of methods of facilitating cache-based presentation and/or review of client-related information, in accordance with one or more embodiments.

### DETAILED DESCRIPTION OF THE INVENTION

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other instances, well-known structures and devices are shown in block diagram form in order to avoid unnecessarily obscuring the embodiments of the invention.

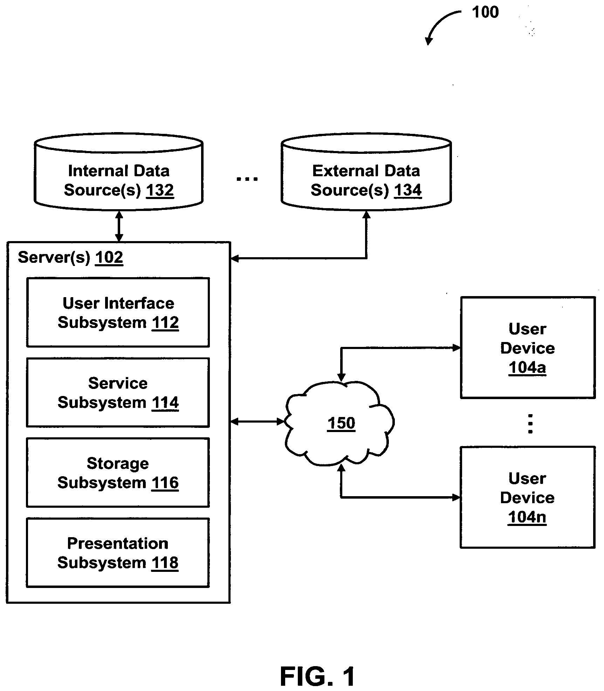

FIG. 1 shows a system 100 for facilitating presentation and/or review of client-related information, in accordance with one or more embodiments. As shown in FIG. 1, system 100 may comprise server 102 (or multiple servers 102). Server 102 may comprise user interface subsystem 112, service subsystem 114, storage subsystem 116, presentation subsystem 118, or other components.

System 100 may further comprise user device 104 (or multiple user devices 104a-104n) that communicates over network 150 with server 102, e.g., to access information from a database that may include internal data source(s) 132 and/or external data source(s) 134. User device 104, implementing aspects of some embodiments disclosed herein, may include any type of mobile terminal, fixed terminal, or other device. By way of example, a user device may include a desktop computer, a laptop computer, a tablet computer, a smartphone, a mobile telephone, a personal digital assistant (PDA), a game console, a vehicle-mounted computer, a wearable device, or other user device. Users may, for instance, utilize one or more user devices to interact with one another, one or more servers, or other components of system 100. Users may, for instance, utilize one or more user devices 104 to interact with server 102 or other components of system 100. It should be noted that, while one or more operations are described herein as being performed by components of server 102, those operations may, in some embodiments, be performed by components of user device 104 or other components of system 100 (or vice versa).

### Presentation and/or Review of Client-Related Information

In some embodiments, a client-related information presentation and/or review system may be provided to facilitate access or review of client-related information by financial advisors, supervisors, or other users. In some embodiments, the system may enable a user to access one or more tasks related to review of one or more client accounts and group the tasks based on review due dates or other predetermined criteria (e.g., to provide a user-friendly interface). The system may provide a user with (1) asset values (e.g., account asset values, client asset values, household asset values, etc.), (2) asset allocation by account, by client, or by household, (3) risk profiles (e.g., account risk profiles, client risk profiles, household risk profiles, etc.), (4) account, client, or household review histories, or (5) other client information. In some embodiments, one or more tasks may comprise review of items, such as infrequent trading, accounts outside risk tolerance, concentrated holdings, accounts where an initial profiling of the account risk profile deviates from the risk limits assigned based on predetermined market assumptions, or other items for attention. In some embodiments, if one or more tasks are not reviewed and/or completed by a financial advisor (or other user) by a certain time, the system may escalate those tasks to a supervisor or other user for review and/or further documentation.

In some embodiments, certain information may be stored in cache memory prior to an indication to present the information to a user, and the information may be obtained from the cache memory responsive to the indication to present the information (or an indication to provide a view that is to include the information). In some embodiments, certain information may be calculated on-the-fly responsive to a client information request. In some embodiments, the information (calculated on-the-fly) may be calculated and stored in cache memory prior to an indication to present the information to a user, and the information may be obtained from the cache memory responsive to the indication to present the information (or an indication to provide a view that is to include the information).

In some embodiments, risk profile values may be determined based on account risk profile information associated with individual accounts. Responsive to the determination of the profile values, at least one subset of the risk profile values may be caused to be presented on a first view of a user interface (that is provided on the user interface prior to a second view of the user interface), and at least one other subset of the risk profile values may be caused to be stored in cache memory while the first view is provided on the user interface and prior to the second view being provided on the user interface. Responsive to an indication to provide the second view on the user interface, the other subset of the risk profile values (stored in the cache memory) may be obtained from the cache memory and caused to be presented on the second view of the user interface. In this way, prior to the indication to provide the second view on the user interface, the other subset of the risk profile values may be stored in the cache memory, for example, to significantly decrease request-to-presentation delays.

In some embodiments, such risk profile values may be calculated on-the-fly using account risk profile information associated with individual accounts responsive to a client information request. As an example, a first subset of the risk profile values (to be presented on the first view of the user interface) and a second subset of risk profile values (to be presented on the second view of the user interface) may be calculated on-the-fly responsive to the client information request. As a further example, the first subset of the risk profile values may be caused to be presented on the first view, and the second subset of the risk profile values may be caused to be stored in cache memory prior to the indication to provide the second view on the user interface. In some embodiments, a request for the most up-to-date account risk profile information may be initiated responsive to obtaining the client information request so that, when the risk profile values are calculated on-the-fly, the resulting risk profile values reflect the most up-to-date values.

In some embodiments, other information may be determined (e.g., on-the-fly responsive to a client information request or other request), and, responsive to such determination, at least one subset of the determined information may be caused to be presented on a first view of a user interface (that is provided on the user interface prior to a second view of the user interface), and at least one other subset of the determined information may be caused to be stored in cache memory while the first view is provided on the user interface and prior to the second view being provided on the user interface. Responsive to an indication to provide the second view on the user interface, the other subset of the determined information (stored in the cache memory) may be obtained from the cache memory and caused to be presented on the second view of the user interface.

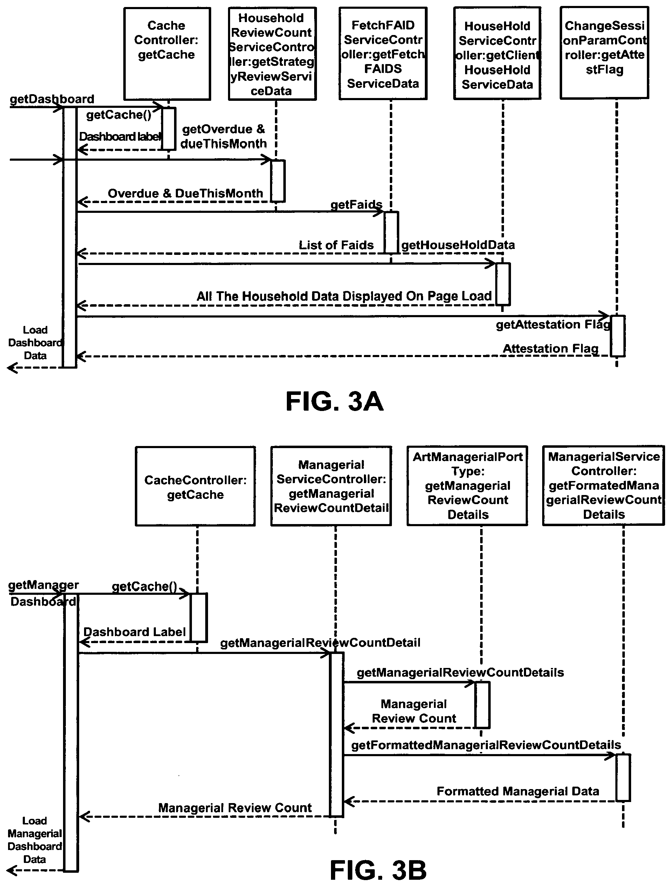

In some embodiments, with respect to FIG. 3A, storage subsystem 116 may store in cache (or other memory space) and subsequently load from the cache (or the other memory space) at least some information displayed on a dashboard (or other view) of an application with lower latency access times. As an example, one or more dashboard labels may be stored in cache and loaded from the cache to quickly display the dashboard labels to the user. Other content not stored in cache may also be obtained from one or more other sources and displayed to the user (with the dashboard labels) on the dashboard. In one use case, for instance, information indicating due and/or overdue reviews for a given period (e.g., for a given month or year) may be obtained from the other sources and displayed on the dashboard. In another use case, information indicating financial advisor identifications (FAIDs) of each financial advisor assigned to particular accounts, attestation flags for tasks that are due (e.g., due the current month) and/or overdue, or other information may be obtained from the other sources and displayed on the dashboard. FIG. 3B shows a similar sequence flow to the flow in FIG. 3A for loading dashboard data related to features available to a supervisor.

Although one or more embodiments herein are described with respect to cache memory and storage/obtainment of certain information in/from cache memory, it is contemplated that, in some embodiments, other memory may be used to store such information in the same or similar manner described herein with respect to cache memory and storage/obtainment of certain information in/from cache memory (e.g., where storage/obtainment of such information in/from the other memory significantly decreases request-to-presentation delays, compared to storage/obtainment of information from other sources). As used herein, cache memory may comprise a hardware cache, a software cache, or other cache memory. As an example, a hardware cache may comprise a CPU cache, translation lookaside buffer (TLB), or other hardware cache. A software cache may comprise a disk cache, a web cache, or other software cache.

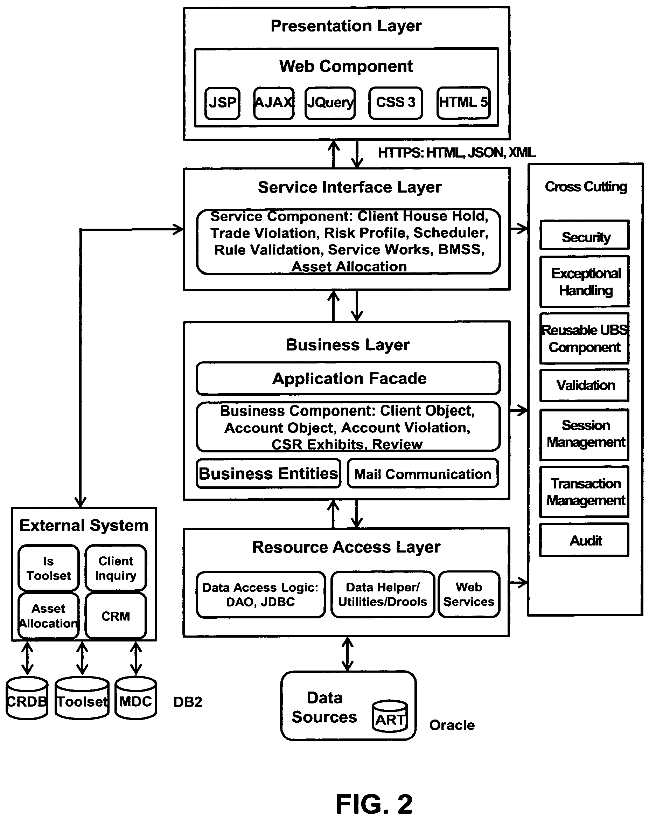

In some embodiments, the layered architecture shown in FIG. 2 may be utilized for facilitating presentation and/or review of client-related information. As an example, the architecture may include a presentation layer, a service interface layer, a business layer, and a resource access layer, each of which may support one or more technologies or features described herein. As shown, for example, the presentation layer may support one or more web component technologies for displaying views to a user and for receiving user interactions at a user interface. In some embodiments, one or more other architectures may be utilized for facilitating presentation and/or review of client-related information.

In some embodiments, user interface subsystem 112 may obtain a request for client information via a user interface (e.g., via a user input provided at the user interface, from a user device at which a user interface is presented, etc.). As an example, the request for client information may comprise a request for risk profile information associated with one or more clients, trading information associated with the clients, client identifying information associated with the clients, task information associated with the clients, or other client information. Risk profile information may comprise account risk values of individual accounts, risk values of individual assets or groups of assets of the individual accounts, or other risk profile information. Trading information may comprise information regarding executed trades associated with one or more clients, cancelled trades associated with the clients, trade bids or request for trade bids associated with the clients, or other trading information. Task information may comprise information regarding tasks to be completed with respect to an account, client, or household, due or overdue tasks of such tasks (to be completed), completed tasks, or other task information. In one use case, tasks assigned to users may comprise review of items, such as infrequent trading, accounts outside risk tolerance, concentrated holdings, accounts where an initial profiling of the account risk profile deviates from the risk limits assigned based on predetermined market assumptions, or other items for attention. In some use cases, other tasks may be assigned.

In some embodiments, service subsystem 114 may obtain client information to be used to determine one or more values that are to be presented on one or more views of a user interface. The client information may be obtained from one or more databases internal to system 100 (e.g., internal data sources 132), one or more databases external to system 100 (e.g., external data sources 134, third party databases, etc.), or other data sources. In some embodiments, responsive to a client information request, service subsystem 114 may obtain (i) a first set of client information to be used to determine risk profile values that is to be presented on a first view of a user interface (e.g., from which the client information request was received), (ii) a second set of client information to be used to determine risk profile values that is to be presented on a second view of the user interface, or (ii) other information. As an example, the first set of client information may comprise first account risk profile information associated with first individual accounts, and the second set of client information may comprise second account risk profile information associated with second individual accounts. As a further example, the first individual accounts may be associated with a first client or household, and the second individual accounts may be associated with a second client or household. As another example, the first individual accounts and the second individual accounts may be associated with the same client or household.

In some embodiments, service subsystem 114 may determine one or more risk profile values based on client information (e.g., account risk profile information or other client information). In some embodiments, service subsystem 114 may determine a first risk profile value based on first account risk profile information associated with first individual accounts, a second risk profile value based on the second account risk profile information associated with second individual accounts, or other values based on other information (e.g., on-the-fly calculation responsive to a client information request or other indication). As an example, a risk profile value may be calculated to be an average of individual account risk values (e.g., non-weighted averaging, a weighted average where each individual account risk value is assigned a weight corresponding to the account's cash value or worth, or other average).

In some embodiments, the first risk profile value may be a first client risk profile value, and the second risk profile value may be a second client risk profile value. Service subsystem 114 may use first account risk values of the first individual accounts associated with a first client to determine the first client risk profile value, and use second account risk values of the second individual accounts associated with a second client to determine the second client risk profile value. In some embodiments, the first risk profile value may be a first household risk profile value, and the second risk profile value may be a second household risk profile value. Service subsystem 114 may use first account risk values of the first individual accounts of individuals associated with a first household to determine the first household risk profile value, and use second account risk values of the second individual accounts of individuals associated with a second household to determine the second household risk profile value. In some embodiments, one of the first risk profile value or the second risk profile value is a client risk profile value, and the other one of the first risk profile value or the second risk profile value is a household risk profile value. As an example, if the first risk profile value is the client risk profile value, and the second risk profile value is the household risk profile value, service subsystem 114 may use first account risk values of the first individual accounts associated with a first client to determine the first client risk profile value, and use second account risk values of the second individual accounts of individuals associated with a second household to determine the second household risk profile value.

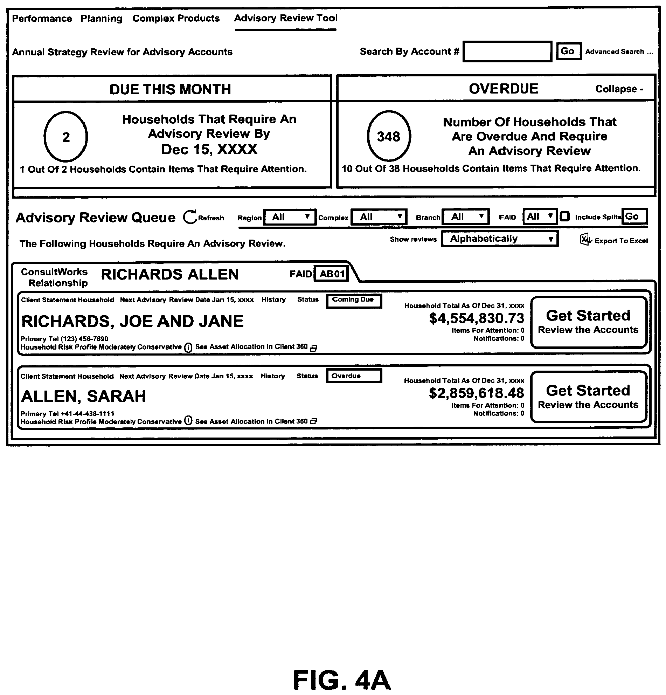

In one use case, with respect to FIG. 4A, a request for client information may be initiated when the "Advisory Review Tool" is selected. Responsive to the client information request, account risk profile information (associated with individual accounts of clients or households) or other client information may be obtained. As indicated in FIG. 4A, the obtained account risk profile information may comprise account risk profile information associated with individual accounts of Joe and Jane Richards, account risk profile information associated with individual accounts of Sarah Allen, and account risk profile information associated with individual accounts of one or more other clients or households. The obtained account risk profile information may be utilized to determine respective risk profile values for the clients or households.

In some embodiments, presentation subsystem 118 may cause one or more risk profile values or other information to be presented on one or more views of a user interface. In some embodiments, responsive to a determination of a first risk profile value, presentation subsystem 118 may provide a first view on the user interface prior to providing a second view on the user interface, and cause the first risk profile value to be presented on the first view of the user interface. Storage subsystem 116 may cause a second risk profile value to be stored in cache memory prior to the second view being provided on the user interface (and before, while, or after the first view is provided on the user interface). Responsive to an indication to provide the second view on the user interface, presentation subsystem 118 may obtain the second risk profile value from the cache memory and cause the second risk profile value to be presented on the second view of the user interface. In some embodiments, the second view may replace the first view on the user interface such that the second view is viewable on the user interface in lieu of the first view. In some embodiments, the second view may supplement the first view of the user interface such that at least a portion of the first view and the second view may be provided on the user interface at a given time.

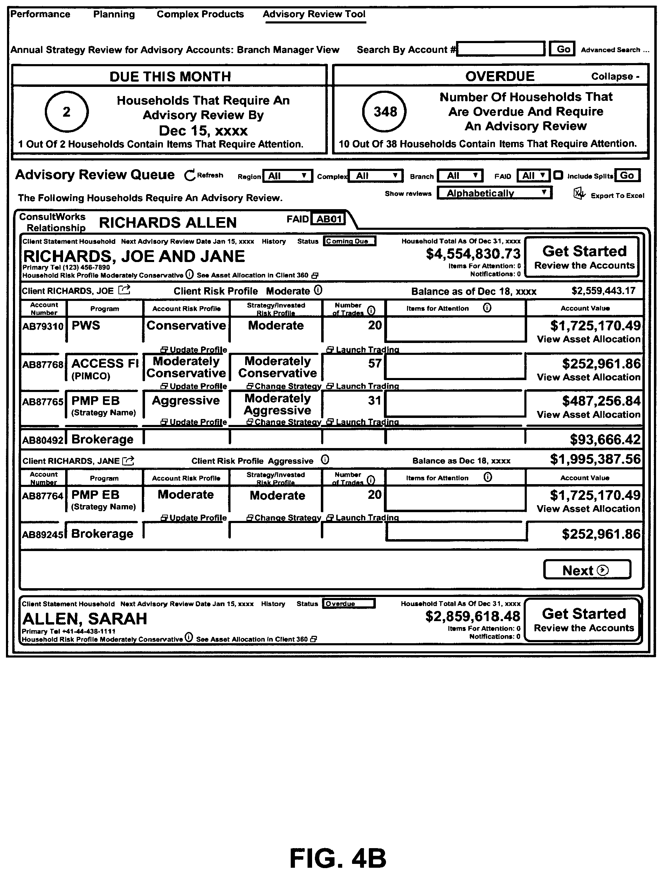

In some embodiments, the indication to provide the second view on the user interface may comprise a user input indicating a request for the second view, and the second risk profile value may be obtained from the cache memory and caused to be presented on the second view of the user interface responsive to the user input indicating the second view request. As an example, with respect to the use case described above for FIG. 4A, at least one subset of the determined risk profile values may be presented on the view shown in FIG. 4A, while another subset of the determined risk profile values may be stored in cache memory. In one scenario, house risk profile values for Joe and Jane Richards (e.g., "Moderately Conservative") and Sarah Allen (e.g., "Moderately Conservative") may be determined and presented on the view shown in FIG. 4A, while account risk profile values, client risk profile values, or other risk profile values for Joe and Jane Richards and Sarah Allen (determined responsive to the client information request) may be stored in the cache memory. In a further scenario, house risk profile values for other clients or households (determined responsive to the client information request) may be stored in the cache memory. Responsive to the user scrolling down (or providing another user input indicating a desire for an additional view), at least some of the house risk profile values for the other clients or households may be obtained from the cache memory and presented on the subsequent view that is loaded on the user interface. In another scenario, with respect to FIG. 4B, at least some of the account risk profile values and client risk profile values for Joe and Jane Richards may be obtained from the cache memory and presented on the view shown in FIG. 4B (e.g., "Moderate" as a client risk profile value for Joe Richard, "Aggressive" as a client risk profile value for Jane Richards, and various account risk profile values for the individual accounts of Joe and Jane Richards).

In some embodiments, the indication to provide the second view on the user interface may comprise an automated script indicating a request for the second view, and the second risk profile value may be obtained from the cache memory and caused to be presented on the second view of the user interface responsive to the automated script indicating the second view request. As an example, with respect to the use case described above for FIG. 4A, an automated script or other component of the "Advisory Review Tool" may be configured to obtain at least some of the not-yet-presented values from cache memory and load those values on a periodic basis or in accordance with a predetermined schedule. In one scenario, for instance, the bottom portion of the user interface shown in FIG. 4A may be replaced with a new view every minute or other time period such that client information (e.g., risk profile values or other client information) may be obtained from the cache memory and presented on the new view in accordance with the automated script.

In some embodiments, service subsystem 114 may determine a trade count associated with a client based on trading information or other client information (e.g., account cash values, billing events, or other information). Presentation subsystem 118 may cause the trade count to be presented on a user interface. As an example, the trading information comprise information regarding executed trades associated with the client, cancelled trades associated with the client, trade bids or requests for trade bids associated with the client, or other trading information. In some embodiments, service subsystem 114 may determine the trade count based on the trading information such that one or more executed trades are excluded from the trade count based on one or more predetermined criteria. Presentation subsystem 118 may cause the trade count to be presented on a user interface. The predetermined criteria may comprise (1) a criterion related to whether a trade was executed within a predetermined time period associated with a predetermined event (e.g., exclude trade if executed a certain number of days before and after an initial billing event, a contribution billing event, quarterly billing event, etc., or other predetermined event), (2) a criterion related to whether a trade was executed to cover a service fee (e.g., exclude trade if sales total is equal to or greater than associated service fee by no more than 10% or other percentage or amount), (3) a criterion related to whether an account (with which an executed trade is associated) holds at least a predetermined threshold amount in cash (e.g., do not exclude if the account holds at least 5% or other percentage or amount in cash), or (4) other predetermined criteria.

In some embodiments, responsive to a client information request or other request, a trade count associated with a client may be obtained (e.g., calculated or retrieved from one or more sources), and storage subsystem 116 may be caused to be stored in cache memory prior to an indication to provide a view, of a user interface, on which the trade count is to be presented. As an example, the trade count may be stored in the cache memory while another view is provided on the user interface (e.g., where the other view includes another trade account for another client or other information). As another example, while at least one subset of determined risk profile values is presented on a first view of the user interface, at least one other subset of the determined risk profile values and the trade count for the client (and other information) may be stored in the cache memory. Responsive to an indication to provide a second view on the user interface, both the other subset of the determined risk profile values and the trade count for the client may be obtained from the cache memory and presented on the second view of the user interface.

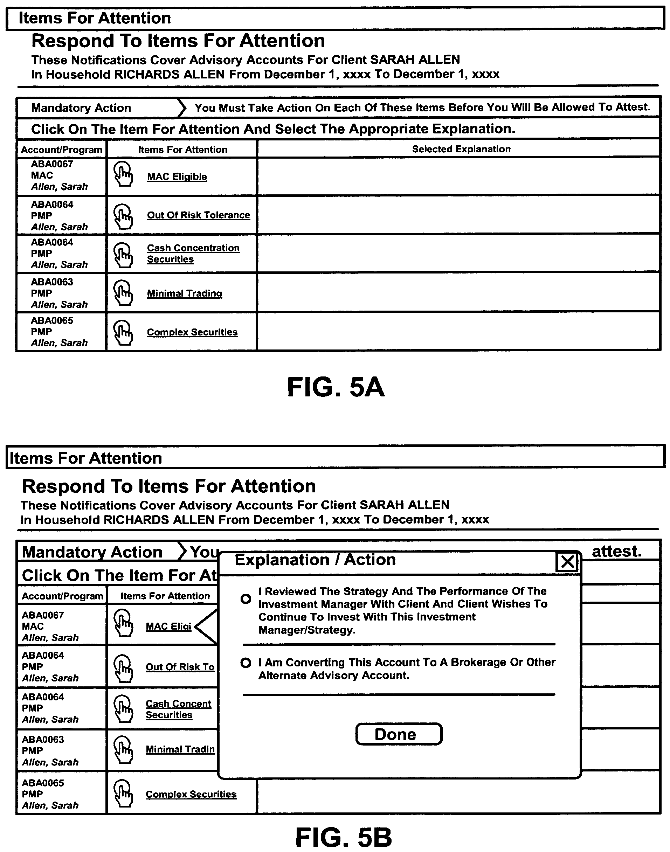

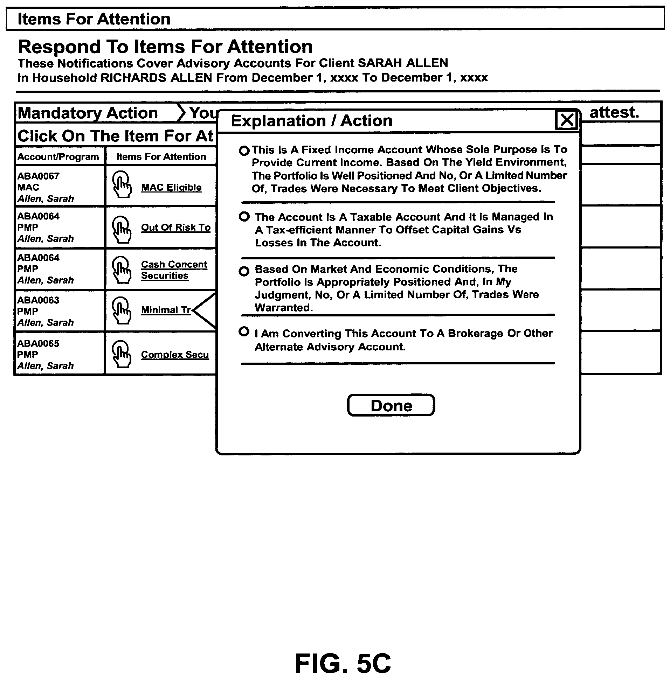

In some embodiments, other information may be obtained (e.g., calculated or retrieved from one or more sources) and caused to be presented on a user interface responsive to one or more requests. In some embodiments, task information may be obtained, and at least some of the task information may be caused to be stored in cache memory prior to an indication to provide a view on which the stored task information is to be presented. Responsive to an indication to provide the view, presentation subsystem 118 may obtain the stored task information from the cache memory and cause the stored task information to be presented on the view of the user interface. As an example, with respect to FIGS. 5A, 5B, and 5C, task information indicating (1) tasks (e.g., tasks related to items for attention for Sarah Allen) for a user to complete, (2) one or more potential responses for completing the tasks, or (3) other information may be obtained from one or more sources. As shown in FIG. 5A, although a list of tasks are presented on a first view of the user interface in FIG. 5A, potential responses for completing the tasks are not presented on the first view of the user interface. However, the potential responses may be stored in cache memory when the potential responses were obtained (along with the indicated task list) responsive to a request for the task information. In one use case, when the user selects one of the task items, the potential responses for that task item may be obtained from the cache memory and presented on a second view of the user interface (e.g., the "Explanation/Action" view shown in FIG. 5B). In another use case, when the user selects another one of the task items, different potential responses for that other task item may be obtained from the cached memory and presented on a third view of the user interface (e.g., the "Explanation/Action" view shown in FIG. 5C).

### Example Flowcharts

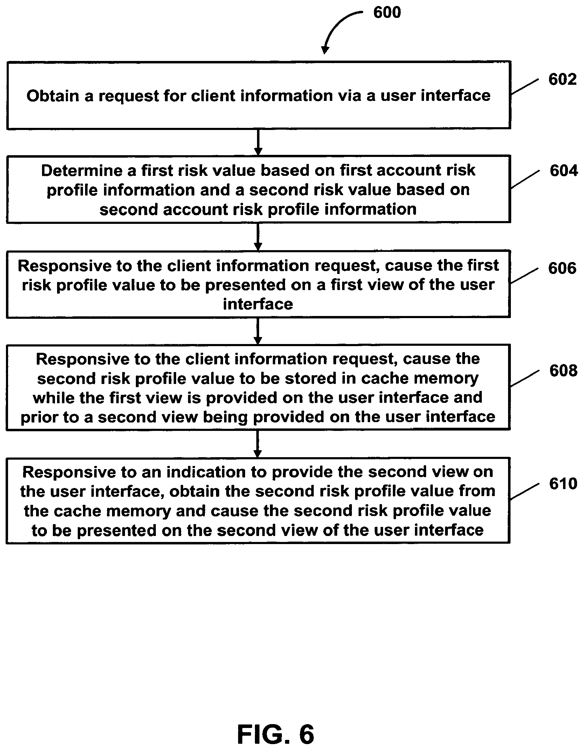

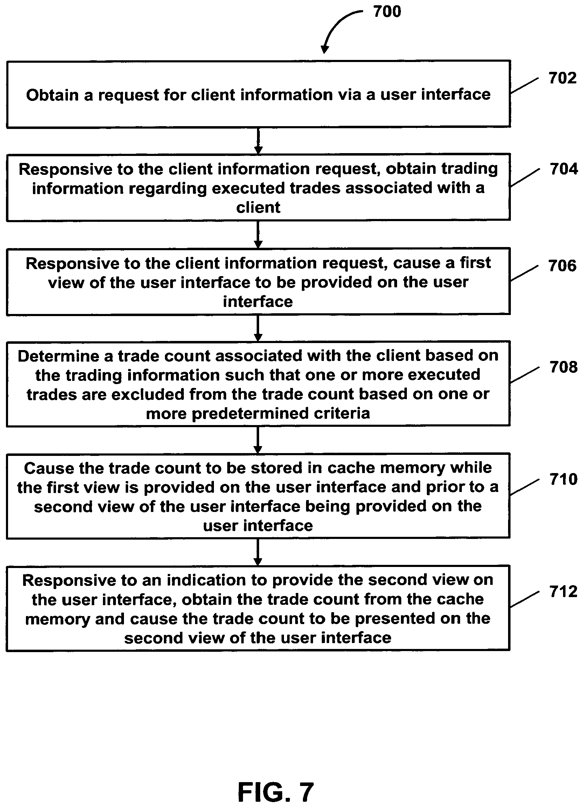

FIGS. 6 and 7 are example flowcharts of processing operations of methods that enable the various features and functionality of the system as described in detail above. The processing operations of each method presented below are intended to be illustrative and non-limiting. In some embodiments, for example, the methods may be accomplished with one or more additional operations not described, and/or without one or more of the operations discussed. Additionally, the order in which the processing operations of the methods are illustrated (and described below) is not intended to be limiting.

In some embodiments, the methods may be implemented in one or more processing devices (e.g., a digital processor, an analog processor, a digital circuit designed to process information, an analog circuit designed to process information, a state machine, and/or other mechanisms for electronically processing information). The processing devices may include one or more devices executing some or all of the operations of the methods in response to instructions stored electronically on an electronic storage medium. The processing devices may include one or more devices configured through hardware, firmware, and/or software to be specifically designed for execution of one or more of the operations of the methods.

FIG. 6 shows a flowchart of a method 600 of facilitating cache-based presentation and/or review of client-related information, in accordance with one or more embodiments.

In an operation 602, a request for client information may be obtained (e.g., via a user input provided at a user interface, from a user device at which the user interface is presented, etc.). As an example, the request for client information may comprise a request for risk profile information or other client information. Operation 602 may be performed by a user interface subsystem that is the same as or similar to user interface subsystem 112, in accordance with one or more embodiments.

In an operation 604, a first risk value may be determined based on first account risk profile information, and a second risk value may be determined based on second account risk profile information. As an example, the first account risk profile information may be associated with first individual accounts, and the second account risk profile information may be associated with second individual accounts. The first individual accounts may be associated with a first client, and the second individual accounts may be associated with a second client. Operation 604 may be performed by a service subsystem that is the same as or similar to service subsystem 114, in accordance with one or more embodiments.

In some embodiments, with respect to operation 604, the first risk profile value may be a first client risk profile value, and the second risk profile value may be a second client risk profile value. Determination of the first risk profile value may comprise using first account risk values of the first individual accounts to determine the first client risk profile value. Determination of the second risk profile value may comprise using second account risk values of the second individual accounts to determine the second client risk profile value.

In some embodiments, with respect to operation 604, the first risk profile value may be a first household risk profile value, and the second risk profile value may be a second household risk profile value. Determination of the first risk profile value may comprise using first account risk values of the first individual accounts of individuals associated with a first household to determine the first household risk profile value. Determination of the second risk profile value may comprise using second account risk values of the second individual accounts of individuals associated with a second household to determine the second household risk profile value.

In an operation 606, the first risk profile value may be caused to be presented on a first view of a user interface responsive to the client information request. As an example, the first view may be provided on the user interface prior to a second view (e.g., on which the second risk profile value or other information may be caused to be presented). Operation 606 may be performed by a presentation subsystem that is the same as or similar to presentation subsystem 118, in accordance with one or more embodiments.

In an operation 608, the second risk profile value may be caused to be stored in cache memory responsive to the client information request. As an example, the second risk profile value may be caused to be stored while the first view is provided on the user interface and prior to the second view being provided on the user interface. Operation 608 may be performed by a storage subsystem that is the same as or similar to storage subsystem 116, in accordance with one or more embodiments.

In an operation 610, the second risk profile value may be obtained from the cache memory and caused to be presented on the second view of the user interface. As an example, the second risk profile value may be obtained and caused to be presented on the second view responsive to an indication to provide the second view on the user interface. Operation 610 may be performed by a presentation subsystem that is the same as or similar to presentation subsystem 118, in accordance with one or more embodiments.

In some embodiments, with respect to operation 610, the indication to provide the second view on the user interface may comprise a user input indicating a request for the second view, and the second risk profile value may be obtained from the cache memory and caused to be presented on the second view of the user interface responsive to the user input indicating the second view request. In some embodiments, the indication to provide the second view on the user interface may comprise an automated script indicating a request for the second view, and the second risk profile value may be obtained from the cache memory and caused to be presented on the second view of the user interface responsive to the automated script indicating the second view request.

FIG. 7 shows a flowchart of a method 700 of facilitating cache-based presentation and/or review of client-related information, in accordance with one or more embodiments.

In an operation 702, a request for client information may be obtained via a user interface from a user device at which the user interface is presented. As an example, the request for client information may comprise a request for trading information or other client information. Operation 702 may be performed by a user interface subsystem that is the same as or similar to user interface subsystem 112, in accordance with one or more embodiments.

In an operation 704, trading information regarding executed trades associated with a client may be obtained responsive to the client information request. Operation 704 may be performed by a service subsystem that is the same as or similar to service subsystem 114, in accordance with one or more embodiments.

In an operation 706, a first view of the user interface may be caused to be provided on the user interface. Operation 706 may be performed by a presentation subsystem that is the same as or similar to presentation subsystem 118, in accordance with one or more embodiments.

In an operation 708, a trade count associated with the client may be determined based on the trading information. As an example, the trade count may be determined such that one or more executed trades are excluded from the trade count based on one or more predetermined criteria. Operation 708 may be performed by a service subsystem that is the same as or similar to service subsystem 114, in accordance with one or more embodiments.

In an operation 710, the trade count may be caused to be stored in cache memory while the first view is provided on the user interface and prior to a second view being provided on the user interface. Operation 710 may be performed by a storage subsystem that is the same as or similar to storage subsystem 116, in accordance with one or more embodiments.

In an operation 712, the trade count may be obtained from the cache memory and caused to be presented on the second view of the user interface. As an example, the trade count may be obtained and caused to be presented on the second view of the user interface responsive to an indication to provide the second view on the user interface. Operation 712 may be performed by a presentation subsystem that is the same as or similar to presentation subsystem 118, in accordance with one or more embodiments.

In some embodiments, with respect to operation 712, the indication to provide the second view on the user interface may comprise a user input indicating a request for the second view, and the trade count may be obtained from the cache memory and caused to be presented on the second view of the user interface responsive to the user input indicating the second view request. In some embodiments, the indication to provide the second view on the user interface may comprise an automated script indicating a request for the second view, and the trade count may be obtained from the cache memory and caused to be presented on the second view of the user interface responsive to the automated script indicating the second view request.

In some embodiments, the various computers and subsystems illustrated in FIG. 1 may include one or more computing devices that are programmed to perform the functions described herein. The computing devices may include one or more electronic storages (e.g., internal data source(s) 132 or other electric storages), one or more physical processors programmed with one or more computer program instructions, and/or other components. The computing devices may include communication lines or ports to enable the exchange of information with a network (e.g., network 150) or other computing platforms via wired or wireless techniques (e.g., Ethernet, fiber optics, coaxial cable, WiFi, Bluetooth, near field communication, or other technologies). The computing devices may include a plurality of hardware, software, and/or firmware components operating together. For example, the computing devices may be implemented by a cloud of computing platforms operating together as the computing devices.

The electronic storages may include non-transitory storage media that electronically stores information. The electronic storage media of the electronic storages may include one or both of system storage that is provided integrally (e.g., substantially non-removable) with servers or client computing platforms or removable storage that is removably connectable to the servers or client computing platforms via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include one or more virtual storage resources (e.g., cloud storage, a virtual private network, and/or other virtual storage resources). The electronic storage may store software algorithms, information determined by the processors, information received from servers, information received from client computing platforms, or other information that enables the functionality as described herein.

The processors may be programmed to provide information processing capabilities in the computing devices. As such, the processors may include one or more of a digital processor, an analog processor, a digital circuit designed to process information, an analog circuit designed to process information, a state machine, and/or other mechanisms for electronically processing information. In some embodiments, the processors may include a plurality of processing units. These processing units may be physically located within the same device, or the processors may represent processing functionality of a plurality of devices operating in coordination. The processors may be programmed to execute computer program instructions to perform functions described herein of subsystems 112-118 or other subsystems. The processors may be programmed to execute computer program instructions by software; hardware; firmware; some combination of software, hardware, or firmware; and/or other mechanisms for configuring processing capabilities on the processors.

It should be appreciated that the description of the functionality provided by the different subsystems 112-118 described herein is for illustrative purposes, and is not intended to be limiting, as any of subsystems 112-118 may provide more or less functionality than is described. For example, one or more of subsystems 112-118 may be eliminated, and some or all of its functionality may be provided by other ones of subsystems 112-118. As another example, additional subsystems may be programmed to perform some or all of the functionality attributed herein to one of subsystems 112-118.

Although the present invention has been described in detail for the purpose of illustration based on what is currently considered to be the most practical and preferred embodiments, it is to be understood that such detail is solely for that purpose and that the invention is not limited to the disclosed embodiments, but, on the contrary, is intended to cover modifications and equivalent arrangements that are within the scope of the appended claims. For example, it is to be understood that the present invention contemplates that, to the extent possible, one or more features of any embodiment can be combined with one or more features of any other embodiment.

## Claims

1. A system for facilitating cache-based presentation and/or review of client-related information, the system comprising:
a computer system that comprises one or more processors programmed with computer program instructions that, when executed, cause the computer system to:
obtain, from a user device at which a user interface is presented, a request for client information, the client information comprising risk profile information;
responsive to the client information request, obtain (i) a first set of client information to be used to determine risk profile values that is to be presented on a first view of the user interface and (ii) a second set of client information to be used to determine risk profile values that is to be presented on a second view of the user interface, the first set of client information comprising first account risk profile information associated with first individual accounts, and the second set of client information comprising second account risk profile information associated with second individual accounts;
responsive to the client information request, determine a first risk profile value based on the first account risk profile information and a second risk profile value based on the second account risk profile information;
responsive to the determination of the first risk profile value, cause the first risk profile value to be presented on the first view of the user interface, the first view being provided on the user interface prior to the second view;
responsive to the determination of the second risk profile value, cause the second risk profile value to be stored in cache memory while the first view is provided on the user interface and prior to the second view being provided on the user interface; and
responsive to an indication to provide the second view on the user interface, obtain the second risk profile value from the cache memory and cause the second risk profile value to be presented on the second view of the user interface.

2. The system of claim 1, wherein the first set of client information further comprises third account risk profile information associated with third individual accounts, and the second set of client information further comprises fourth risk profile information associated with fourth individual accounts, and wherein the computer system is further caused to:
determine, responsive to the client information request, a third risk profile value based on the third account risk profile information and a fourth risk profile value based on the fourth account risk profile information;
responsive to the determination of the third risk profile value, cause the third risk profile value to be presented on the first view of the user interface along with the first risk profile value at a given time;
responsive to the determination of the fourth risk profile value, cause the fourth risk profile value to be stored in the cache memory along with the second risk profile value at a given time while the first view is provided on the user interface and prior to the second view being provided on the user interface; and
responsive to the indication to provide the second view on the user interface, obtain the fourth risk profile value from the cache memory and cause the fourth risk profile value to be presented on the second view of the user interface along with the second risk profile value at a given time.

3. The system of claim 1, wherein the indication to provide the second view on the user interface comprises a user input indicating a request for the second view, and wherein the second risk profile value is obtained from the cache memory and caused to be presented on the second view of the user interface responsive to the user input indicating the second view request.

4. The system of claim 1, wherein the indication to provide the second view on the user interface comprises an automated script indicating a request for the second view, and wherein the second risk profile value is obtained from the cache memory and caused to be presented on the second view of the user interface responsive to the automated script indicating the second view request.

5. The system of claim 1, wherein the first individual accounts are associated with a first client, and the second individual accounts are associated with a second client.

6. The system of claim 1, wherein the first risk profile value is a first client risk profile value, and the second risk profile value is a second client risk profile value such that:
determining the first risk profile value comprises using first account risk values of the first individual accounts associated with a first client to determine the first client risk profile value responsive to the client information request; and
determining the second risk profile value comprises using second account risk values of the second individual accounts associated with a second client to determine the second client risk profile value responsive to the client information request.

7. The system of claim 1, wherein the first risk profile value is a first household risk profile value, and the second risk profile value is a second household risk profile value such that:
determining the first risk profile value comprises using first account risk values of the first individual accounts of individuals associated with a first household to determine the first household risk profile value responsive to the client information request; and
determining the second risk profile value comprises using second account risk values of the second individual accounts of individuals associated with a second household to determine the second household risk profile value responsive to the client information request.

8. The system of claim 1, wherein one of the first risk profile value or the second risk profile value is a client risk profile value, and the other one of the first risk profile value or the second risk profile value is a household risk profile value.

9. The system of claim 1, wherein the computer system is further caused to:
obtain trading information regarding executed trades associated with a client;
determine a trade count associated with the client based on the trading information such that one or more executed trades are excluded from the trade count based on one or more predetermined criteria; and
cause the trade count to be presented on the user interface.

10. The system of claim 9, wherein the trading information is obtained and/or the trade count is determined responsive to the client information request.

11. The system of claim 9, wherein the computer system is further caused to:
responsive to the determination of the trade count, cause the trade count to be stored in the cache memory while the first view is provided on the user interface and prior to the second view being provided on the user interface; and
responsive to the indication to provide the second view on the user interface, obtain the trade count from the cache memory and cause the trade count to be presented on the second view of the user interface.

12. A method of facilitating cache-based presentation and/or review of client-related information, the method being implemented by a computer system comprising one or more processors executing computer program instructions that, when executed, perform the method, the method comprising:
obtaining, from a user device at which a user interface is presented, a request for client information, the client information comprising risk profile information;
determining a first risk profile value based on first account risk profile information associated with first individual accounts and a second risk profile value based on second account risk profile information associated with second individual accounts;
responsive to the client information request, causing the first risk profile value to be presented on a first view of the user interface;
responsive to the client information request, causing the second risk profile value to be stored in cache memory while the first view is provided on the user interface and prior to a second view being provided on the user interface; and
responsive to an indication to provide the second view on the user interface, obtaining the second risk profile value from the cache memory and causing the second risk profile value to be presented on the second view of the user interface.

13. The method of claim 12, wherein the first set of client information further comprises third account risk profile information associated with third individual accounts, and the second set of client information further comprises fourth risk profile information associated with fourth individual accounts, the method further comprising:
determining a third risk profile value based on the third account risk profile information and a fourth risk profile value based on the fourth account risk profile information;
responsive to the determination of the third risk profile value, causing the third risk profile value to be presented on the first view of the user interface along with the first risk profile value at a given time;
responsive to the determination of the fourth risk profile value, causing the fourth risk profile value to be stored in the cache memory along with the second risk profile value at a given time while the first view is provided on the user interface and prior to the second view being provided on the user interface; and
responsive to the indication to provide the second view on the user interface, obtaining the fourth risk profile value from the cache memory and causing the fourth risk profile value to be presented on the second view of the user interface along with the second risk profile value at a given time.

14. The method of claim 12, wherein the indication to provide the second view on the user interface comprises a user input indicating a request for the second view, and wherein the second risk profile value is obtained from the cache memory and caused to be presented on the second view of the user interface responsive to the user input indicating the second view request.

15. The method of claim 12, wherein the indication to provide the second view on the user interface comprises an automated script indicating a request for the second view, and wherein the second risk profile value is obtained from the cache memory and caused to be presented on the second view of the user interface responsive to the automated script indicating the second view request.

16. The method of claim 12, wherein the first risk profile value is a first client risk profile value, and the second risk profile value is a second client risk profile value such that:
determining the first risk profile value comprises using first account risk values of the first individual accounts associated with a first client to determine the first client risk profile value responsive to the client information request; and
determining the second risk profile value comprises using second account risk values of the second individual accounts associated with a second client to determine the second client risk profile value responsive to the client information request.

17. The method of claim 12, wherein the first risk profile value is a first household risk profile value, and the second risk profile value is a second household risk profile value such that:
determining the first risk profile value comprises using first account risk values of the first individual accounts of individuals associated with a first household to determine the first household risk profile value responsive to the client information request; and
determining the second risk profile value comprises using second account risk values of the second individual accounts of individuals associated with a second household to determine the second household risk profile value responsive to the client information request.

18. The method of claim 12, further comprising:
obtaining trading information regarding executed trades associated with a client;
determining a trade count associated with the client based on the trading information such that one or more executed trades are excluded from the trade count based on one or more predetermined criteria; and
causing the trade count to be presented on the user interface.

19. A system for facilitating cache-based presentation and/or review of client-related information, the system comprising:
a computer system that comprises one or more processors programmed with computer program instructions that, when executed, cause the computer system to:
obtain, via a user input provided at a user interface, a request for client information, the client information comprising risk profile information;
responsive to the client information request, obtain (i) a first set of client information to be used to determine risk profile values that is to be presented on a first view of the user interface and (ii) a second set of client information to be used to determine risk profile values that is to be presented on a second view of the user interface, the first set of client information comprising first account risk profile information associated with first individual accounts, and the second set of client information comprising second account risk profile information associated with second individual accounts;
responsive to the client information request, determine a first risk profile value based on the first account risk profile information and a second risk profile value based on the second account risk profile information;
responsive to the determination of the first risk profile value, cause the first risk profile value to be presented on the first view of the user interface, the first view being provided on the user interface prior to the second view;
responsive to the determination of the second risk profile value, cause the second risk profile value to be stored in cache memory while the first view is provided on the user interface and prior to the second view being provided on the user interface; and
responsive to an indication to provide the second view on the user interface, obtain the second risk profile value from the cache memory and cause the second risk profile value to be presented on the second view of the user interface.

20. The system of claim 19, wherein the computer system comprises a user device that includes the one or more processors, and wherein the indication to provide the second view on the user interface comprises a user input indicating a request for the second view, and wherein the second risk profile value is obtained from the cache memory and caused to be presented on the second view of the user interface responsive to the user input indicating the second view request.
